(19) Europäisches Patentamt
European Patent Office
Office européen des brevets

(11) **EP 4 607 461 A1**

(12) **EUROPEAN PATENT APPLICATION**
published in accordance with Art. 153(4) EPC

(43) Date of publication:
**27.08.2025 Bulletin 2025/35**

(21) Application number: **23948242.5**

(22) Date of filing: **30.10.2023**

(51) International Patent Classification (IPC):
**G06T 7/13** (2017.01)

(86) International application number:
**PCT/CN2023/127978**

(87) International publication number:
**WO 2025/030676 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2023 CN 202311008382**

(71) Applicant: **ZG Technology Co., Ltd.**
**Wuhan, Hubei 430205 (CN)**

(72) Inventors:
• **WANG, Chen**
**Wuhan, Hubei 430205 (CN)**
• **HE, Yuan**
**Wuhan, Hubei 430205 (CN)**
• **WANG, Xiaonan**
**Wuhan, Hubei 430205 (CN)**
• **LU, Mingyu**
**Wuhan, Hubei 430205 (CN)**
• **REN, Guanbao**
**Wuhan, Hubei 430205 (CN)**
• **CHENG, Jianhua**
**Wuhan, Hubei 430205 (CN)**

(74) Representative: **ABREMA SA**
**Avenue du Théâtre 16**
**1005 Lausanne (CH)**

(54) **WORKPIECE EDGE MEASUREMENT METHOD AND APPARATUS, AND ELECTRONIC DEVICE AND STORAGE MEDIUM**

(57)    Provided in the present invention are a workpiece edge measurement method and apparatus, and an electronic device and a storage medium. The method comprises: acquiring a left image and a right image of an edge of a workpiece to be subjected to measurement that are collected by a binocular camera; performing line-to-line matching on the basis of at least one ray of light in the left image and at least one ray of light in the right image, so as to determine at least one line matching pair; on the basis of an initial leading edge point of a first ray of light, an initial leading edge point of a second ray of light, an initial trailing edge point of the first ray of light, an initial trailing edge point of the second ray of light, grayscale gradient values of the points of the first ray of light and grayscale gradient values of the points of the second ray of light in each line matching pair, determining a target leading edge point and a target trailing edge point of a projected ray of light corresponding to each line matching pair; and on the basis of the target leading edge point and the target trailing edge point of the projected ray of light corresponding to each line matching pair, determining the coordinates of the edge of said workpiece. Measurement errors caused by differences in viewing angles and illumination can be avoided, thereby increasing the accuracy of workpiece edge measurement.

FIG. 2

**Description**

**CROSS REFERENCE TO RELATED APPLICATION**

The present invention claims the priority to the Chinese patent application with the filing No. 202311008382.8 filed with the Chinese National Intellectual Property Administration on August 10, 2023 and entitled "WORKPIECE EDGE MEASUREMENT METHOD AND APPARATUS, AND ELECTRONIC DEVICE AND STORAGE MEDIUM", the contents of which are incorporated in entirety by reference in the present invention.

**TECHNICAL FIELD**

The present invention relates to the technical field of industrial measurement, and specifically to a workpiece edge measurement method and apparatus, an electronic device and a storage medium.

**BACKGROUND ART**

Sheet metal parts are common parts in the industry such as automobiles, and sheet metal edge detection is an important component in detection of sheet metal parts.

In the prior art, common sheet metal edge measurement methods are mostly contact-type single-point measurement, which have low measurement efficiency, and can hardly meet production efficiency requirements; moreover, the contact-type measurement method is likely to cause deformation of the sheet metal parts in a measurement process, leading to measurement errors. In addition, edge measurement can also be performed on the basis of binocular stereo vision in the prior art, but the edge measurement method based on the binocular stereo vision is susceptible to lighting conditions and camera field-of-view variations, causing significant matching errors between corresponding points. In addition, when there are more edges, the binocular stereo-based edge matching is prone to false matches, thus causing large measurement errors.

**SUMMARY**

The present invention aims at providing a workpiece edge measurement method and apparatus, an electronic device and a storage medium, directed to the above shortcomings in the prior art, so as to improve accuracy of workpiece edge measurement.

In order to achieve the above objective, technical solutions adopted in embodiments of the present invention are as follows.

In the first aspect, embodiments of the present invention provide a workpiece edge measurement method, applied to a control device in a binocular line-structured light measurement system, where the binocular line-structured light measurement system includes a line-structured light device, a pose measurement device and the control device, where the line-structured light device includes a binocular camera and a line-structured light emitter, and the method includes steps of:

acquiring a left image and a right image of an edge of a workpiece to be detected that are collected by the binocular camera, where the left image and the right image respectively include at least one light line projected by the line-structured light emitter;

performing line-to-line matching based on at least one light line in the left image and at least one light line in the right image, so as to determine at least one line matching pair, where the line matching pair includes a first light line in the left image and a second light line in the right image, and the first light line and the second light line are derived from the same light line projected by the line-structured light emitter;

determining an initial leading-edge point of a first light line, an initial leading-edge point of a second light line, an initial trailing-edge point of the first light line and an initial trailing-edge point of the second light line in each line matching pair based on coordinate information of respective endpoints of the first light line and coordinate information of respective endpoints of the second light line in each line matching pair;

determining a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair; and

determining coordinates of the edge of the workpiece to be detected, based on the target leading-edge point and the target trailing-edge point of the projected light line corresponding to each line matching pair.

Optionally, the step of performing line-to-line matching based on at least one light line in the left image and at least one light line in the right image, so as to determine at least one line matching pair, includes:

determining, based on y-coordinates of respective first points in a current light line in the left image, second points in the right image whose y-coordinates are the same as those of the first points;

determining three-dimensional point coordinates corresponding to the respective first points based on coordinates of the respective first points and coordinates of respective second points;

determining each line matching pair based on the three-dimensional point coordinates corresponding to the respective first points and coordinates of various structured light planes corresponding to the line-structured light emitter.

Optionally, the step of determining each line matching pair based on the three-dimensional coordinates corresponding to the respective first points and coordinates of structured light plane corresponding to the line-structured light emitter includes:

determining the current light line and a line where the second points corresponding to respective first points of the current light line are located, as a line matching pair, if the three-dimensional point coordinates corresponding to all the first points of the current light line are all located on any one of the structured light planes.

Optionally, the step of determining an initial leading-edge point of a first light line, an initial leading-edge point of a second light line, an initial trailing-edge point of the first light line and an initial trailing-edge point of the second light line in each line matching pair based on coordinate information of respective endpoints of the first light line and coordinate information of respective endpoints of the second light line in each line matching pair, includes:

determining a start-point coordinate and a tail-point coordinate of the first light line and a start-point coordinate and a tail-point coordinate of the second light line in each line matching pair, respectively;

determining a first three-dimensional point corresponding to start-point coordinates of the first light line and start-point coordinates of the second light line, if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image;

taking the start-point coordinates of the first light line as coordinates of an initial leading-edge point of the first light line, and taking the start-point coordinates of the second light line as coordinates of an initial leading-edge point of the second light line, if the first three-dimensional point is located within boundaries of a structured light plane corresponding to the line matching pair, and has a distance to the boundaries of the structured light plane greater than a second preset threshold;

determining a first three-dimensional point corresponding to tail-point coordinates of the first light line and tail-point coordinates of the second light line, if a difference between y-coordinate in the tail-point coordinates of the first light line and y-coordinate in the tail-point coordinates of the second light line is less than a first preset threshold, the y-coordinate in the tail-point coordinates of the first light line is not located on boundaries of the left image, and y-coordinate in the tail-point coordinates of the second light line is not located on boundaries of the right image; and

taking the tail-point coordinates of the first light line as coordinates of the initial trailing-edge point of the first light line, and taking the tail-point coordinates of the second light line as coordinates of the initial trailing-edge point of the second light line, if the first three-dimensional point is located within boundaries of the structured light plane corresponding to the line matching pair, and has a distance to the boundaries of the structured light plane greater than a second preset threshold.

Optionally, the step of determining a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair, includes:

determining a target leading-edge point of a projected light line corresponding to the line matching pair, based on coordinates of the initial leading-edge point of the first light line, grayscale gradient values of various points in the first light line, coordinates of the initial leading-edge point of the second light line and grayscale gradient values of various points in the second light line; and

determining a target trailing-edge point of the projected light line corresponding to the line matching pair, based on coordinates of the initial trailing-edge point of the first light line, grayscale gradient values of various points in the first light line, coordinates of the initial trailing-edge points of the second light line and grayscale gradient values of various points in the second light line.

Optionally, the step of determining a target leading-edge point of a projected light line corresponding to the line matching pair, based on coordinates of the initial leading-edge point of the first light line, grayscale gradient values of various points in the first light line, coordinates of the initial leading-edge point of the second light line and grayscale gradient values of various points in the second light line includes:

selecting a first preset number of first edge points in the first light line based on the coordinates of the initial leading-edge point of the first light line;

determining a middle leading-edge point of the first light line based on grayscale gradient value on the coordinates of the initial leading-edge point of the first light line and grayscale gradient values of various first edge points;

selecting a second preset number of second edge points in the second light line based on the coordinates of the initial leading-edge point of the second light line;

determining a middle leading-edge point of the second light line based on the grayscale value on the coordinates of the initial leading-edge point of the second light line and the grayscale values of various second edge points; and

determining a target leading-edge point of the projected light line corresponding to the line matching pair, based on the middle leading-edge point of the first light line and the middle leading-edge point of the second light line.

Optionally, the step of determining a target leading-edge point of a projected light line corresponding to the line matching pair, based on a target leading-edge point of the first light line and a target leading-edge point of the second light line, includes:

calculating an average value of y-coordinate of the middle leading-edge point of the first light line and y-coordinate of the middle leading-edge point of the second light line, so as to obtain average y-coordinate;

determining a point in the first light line whose y-coordinate is the average y-coordinate as the target leading-edge point of the first light line;

determining a point in the second light line whose y-coordinate is the average y-coordinate as the target leading-edge point of the second light line; and

determining the target leading-edge point of the projected light line corresponding to the line matching pair, based on the target leading-edge point of the first light line and the target leading-edge point of the second light line.

In the second aspect, embodiments of the present invention further provide a workpiece edge measurement apparatus, including:

an acquisition module, configured to acquire a left image and a right image of an edge of a workpiece to be detected that are collected by the binocular camera, where the left image and the right image respectively include at least one light line projected by the line-structured light emitter;

a determination module, configured to perform line-to-line matching based on at least one light line in the left image and at least one light line in the right image, so as to determine at least one line matching pair, where the line matching pair includes a first light line in the left image and a second light line in the right image, and the first light line and the second light line are derived from the same light line projected by the line-structured light emitter;

the determination module, configured to determine an initial leading-edge point of a first light line, an initial leading-edge point of a second light line, an initial trailing-edge point of the first light line and an initial trailing-edge point of the second light line in each line matching pair, based on coordinate information of respective endpoints of the first light line and coordinate information of respective endpoints of the second light line in each line matching pair;

the determination module, configured to determine a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair; and

the determination module, configured to determine coordinates of the edge of the workpiece to be detected, based on the target leading-edge point and the target trailing-edge point of the projected light line corresponding to each line matching pair.

Optionally, the determination module is specifically configured to:

determine, based on y-coordinates of respective first points in a current light line in the left image, second points in the right image whose y-coordinates are the same as those of the first points;

determine three-dimensional point coordinates corresponding to respective first points based on coordinates of respective first points and coordinates of respective second points; and

determine each line matching pair based on the three-dimensional point coordinates corresponding to the respective first points and coordinates of various structured light planes corresponding to the line-structured light emitter.

Optionally, the determination module is specifically configured to:

determine the current light line and a line where second points corresponding to respective first points of the current light line are located, as a line matching pair, if the three-dimensional point coordinates corresponding to all the first points of the current light line are all located on any one of the structured light planes.

Optionally, the determination module is specifically configured to:

determine a start-point coordinate and a tail-point coordinate of the first light line and a start-point coordinate and a tail-point coordinate of the second light line in each line matching pair, respectively;

determine a first three-dimensional point corresponding to start-point coordinates of the first light line and start-point coordinates of the second light line, if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image;

take the start-point coordinates of the first light line as coordinates of the initial leading-edge point of the first light line, and take the start-point coordinates of the second light line as coordinates of the initial leading-edge point of the second light line, if the first three-dimensional point is located within boundaries of the structured light plane corresponding to the line matching pair, and has a distance to the boundaries of the structured light plane greater than a second preset threshold;

determine a first three-dimensional point corresponding to tail-point coordinates of the first light line and tail-point coordinates of the second light line, if a difference between y-coordinate in the tail-point coordinates of the first light line and y-coordinate in the tail-point coordinates of the second light line is less than a first preset threshold, the y-coordinate in the tail-point coordinates of the first light line is not located on boundaries of the left image, and y-coordinate in the tail-point coordinates of the second light line is not located on boundaries of the right image; and

take the tail-point coordinates of the first light line as coordinates of the initial trailing-edge point of the first light line, and take the tail-point coordinates of the second light line as coordinates of the initial trailing-edge point of the second light line, if the first three-dimensional point is located within boundaries of the structured light plane corresponding to the line matching pair, and has a distance to the boundaries of the structured light plane greater than a second preset threshold.

Optionally, the determination module is specifically configured to:

determine a target leading-edge point of a projected light line corresponding to the line matching pair, based on the coordinates of the initial leading-edge point of the first light line, grayscale gradient values of various points in the first light line, coordinates of the initial leading-edge point of the second light line and grayscale gradient values of various points in the second light line; and

determine a target trailing-edge point of the projected light line corresponding to the line matching pair, based on coordinates of the initial trailing-edge point of the first light line, grayscale gradient values of various points in the first light line, coordinates of the initial trailing-edge point of the second light line and grayscale gradient values of various points in the second light line.

Optionally, the determination module is specifically configured to:

select a first preset number of first edge points in the first light line based on the coordinates of the initial leading-edge point of the first light line;

determine a middle leading-edge point of the first light line based on grayscale gradient value on the coordinates of the initial leading-edge point of the first light line and grayscale gradient values of various first edge points;

select a second preset number of second edge points in the second light line based on the coordinates of the initial leading-edge point of the second light line;

determine a middle leading-edge point of the second light line based on the grayscale value on the coordinates of the initial leading-edge point of the second light line and the grayscale values of various second edge points; and

determine a target leading-edge point of the projected light line corresponding to the line matching pair, based on the middle leading-edge point of the first light line and the middle leading-edge point of the second light line.

Optionally, the determination module is specifically configured to:

calculate an average value of y-coordinate of the middle leading-edge point of the first light line and y-coordinate of the middle leading-edge point of the second light line, so as to obtain average y-coordinate;

determine a point in the first light line whose y-coordinate is the average y-coordinate as a target leading-edge point of the first light line;

determine a point in the second light line whose y-coordinate is the average y-coordinate as the target leading-edge point of the second light line; and

determine a target leading-edge point of the projected light line corresponding to the line matching pair, based on the target leading-edge point of the first light line and the target leading-edge point of the second light line.

In the third aspect, embodiments of the present invention further provide an electronic device, including a processor, a storage medium and a bus, where the memory stores program instructions executable by the processor, and when an application program runs, the processor and the memory 802 communicates through the bus, and the processor execute the program instructions, so as to execute steps of the above workpiece edge measurement method according to the first aspect.

In the fourth aspect, embodiments of the present invention provide a computer-readable storage medium, on which a computer program is stored, and the computer program, when read and executed, executing steps of the above workpiece edge measurement method according to the first aspect.

Beneficial effects of the present invention are as follows.

The present invention provides a workpiece edge measurement method and apparatus, an electronic device and a storage medium, where the left image and the right image of the light line of the line-structured light projected on the edge of the workpiece to be detected are acquired respectively by the left and right cameras, the line matching pair is obtained by performing the line-to-line matching on the light lines collected in the left image and the right image, and the target leading-edge point and the target trailing-edge points of the projected light line corresponding to each line matching pair are obtained on the basis of the first light line and the second light line in each line matching pair, so as to obtain the coordinates of the edge of the workpiece to be detected. In this process, measurement of the edge of the workpiece can be realized through the line-to-line matching and edge-point identification, and the process does not need contact with the workpiece, thus avoiding measurement errors caused by deformation of the workpiece due to contact with the workpiece, and compared with the stereo vision-based edge measurement, measurement errors caused by viewing angle and lighting variations can be effectively avoided.

## BRIEF DESCRIPTION OF DRAWINGS

In order to more clearly illustrate technical solutions of embodiments of the present invention, drawings which need to be used in the embodiments will be briefly introduced below. It should be understood that the drawings merely show some embodiments of the present invention, and thus should not be considered as limitation to the scope. Those ordinarily skilled in the art still could obtain other relevant drawings according to these drawings, without using any inventive efforts.

FIG. 1 is a structural schematic diagram of a binocular line-structured light measurement system provided by embodiments of the present invention;

FIG. 2 is a schematic flowchart of a workpiece edge measurement method provided by embodiments of the present invention;

FIG. 3 is a schematic diagram of images collected by left and right cameras provided by embodiments of the present invention;

FIG. 4 is a schematic flowchart of determining line matching pairs provided by embodiments of the present invention;

FIG. 5 is a schematic flowchart of another workpiece edge measurement method provided by embodiments of the present invention;

FIG. 6 is a schematic flowchart of a further workpiece edge measurement method provided by embodiments of the present invention;

FIG. 7 is a schematic flowchart of an additional workpiece edge measurement method provided by embodiments of the present invention;

FIG. 8 is a complete schematic flowchart of the workpiece edge measurement method provided by embodiments of the present invention;

FIG. 9 is a schematic diagram of an apparatus for the workpiece edge measurement method provided by embodiments of the present invention; and

FIG. 10 is a structural block diagram of an electronic device provided by embodiments of the present invention.

DETAILED DESCRIPTION OF EMBODIMENTS

In order to make objectives, technical solutions and advantages of embodiments of the present invention clearer, the technical solutions in the embodiments of the present invention will be described clearly and completely below in conjunction with drawings in the embodiments of the present invention, and it should be understood that the drawings in the present invention are merely for an illustrative and descriptive purpose, rather than limiting the scope of protection of the present invention. Besides, it should be understood that schematic drawings are not drawn to scale. The flowcharts used in the present invention show operations implemented according to some embodiments of the present invention. It should be understood that the operations in the flowcharts may be implemented out of order, and steps without a logical relationship may be implemented reversely or concurrently. In addition, those skilled in the art, guided by contents of the present invention, could add one or more other operations to the flowchart, or remove one or more operations from the flowchart.

Besides, only some but not all embodiments of the present invention are described. Generally, components in the embodiments of the present invention, as described and shown in the drawings herein, may be arranged and designed in various different configurations. Therefore, the following detailed description of the embodiments of the present invention provided in the drawings is not intended to limit the claimed scope of the present invention, but merely illustrates chosen embodiments of the present invention. All of other embodiments obtained by those skilled in the art based on the embodiments of the present invention without using inventive efforts shall fall within the scope of protection of the present invention.

It should be noted that the term "include" will be used in the embodiments of the present invention for indicating presence of features stated later, but it does not exclude addition of other features.

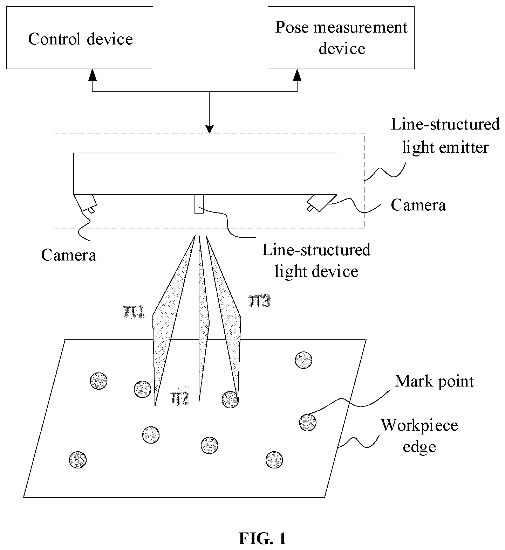

FIG. 1 is a structural schematic diagram of a binocular line-structured light measurement system provided by embodiments of the present invention. The binocular line-structured light measurement system may include a line-structured light device, a pose measurement device and a control device, where the line-structured light device may include a binocular camera and a line-structured light emitter.

Herein, the binocular camera may include a left camera and a right camera, where the left camera and the right camera are respectively connected to the line-structured light emitter. When the line-structured light emitter emits a light line to a workpiece, the left camera and the right camera both can collect images on the workpiece, where the collected images contain information of the light line emitted by line-structured light. The line-structured light emitter herein can emit one light line or a plurality of light lines.

Optionally, the pose measurement device can be configured to acquire real-time pose information of the line-structured light device, and transform data collected by the line-structured light device into the same coordinate system; that is to say, it transforms data in the images collected by the left camera and the right camera within the line-structured light device into the same coordinate system. This is because the line-structured light device requires multiple movements during workpiece edge measurement so as to acquire complete workpiece edge data, and the collected data can be transformed into the same coordinate system only based on a position and orientation of the line-structured light device each time, thereby obtaining a complete workpiece edge.

Optionally, the control device can be configured to control light-source emission, synchronization of image collection of the cameras, data storage, edge point detection and coordinate resolution, pose resolution, etc.

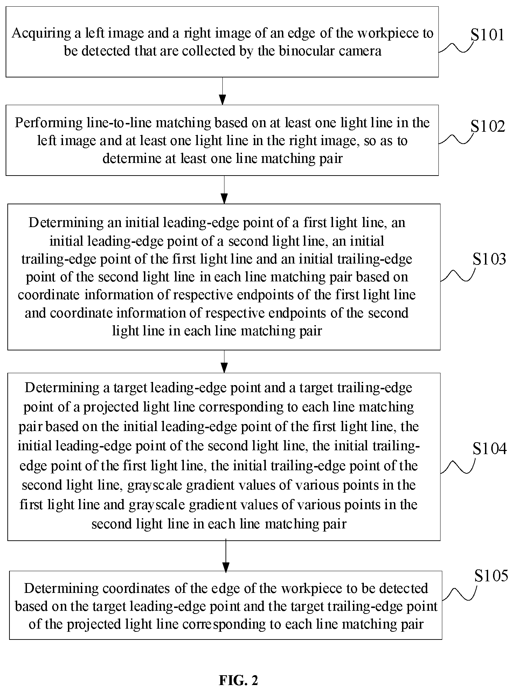

FIG. 2 is a schematic flowchart of a workpiece edge measurement method provided by embodiments of the present invention. As shown in FIG. 2, the method is applied to the control device in the preceding binocular line-structured light measurement system, where the method includes:

S101, acquiring a left image and a right image of an edge of the workpiece to be detected that are collected by the binocular camera.

Herein, the left image and the right image respectively can include at least one light line projected by the line-structured light emitter.

Optionally, the line-structured light emitter within the line-structured light device can project the light line to the edge of the workpiece to be detected, the left camera and the right camera within the line-structured light device can collect information of the light line projected on the edge of the workpiece to be detected and information of preset mark points on the workpiece to be detected, and then the collected left image and right image can further respectively include information of the preset mark points on the workpiece to be detected. The preset mark points herein can be mark points provided on or around the edge of the workpiece to be detected in advance, the pose resolution can be performed based on the information of these preset mark points, so that following coordinates can be transformed.

Optionally, epipolar rectification can be performed on the collected left image based on distortion parameters and intrinsic and extrinsic parameters of the left camera, and a plane-coordinate system of the left image is established by taking a lower left corner of the left image as an origin, a row direction as a vertical y-axis, and a column direction as a horizontal x-axis; and epipolar rectification can be performed on the collected right image based on distortion parameters and intrinsic and extrinsic parameters of the right camera, and a plane-coordinate system of the right image is established by taking a lower left corner of the right image as an origin, a row direction as a vertical y-axis, and a column direction as a horizontal x-axis. Herein, the plane-coordinate system of the left image and the plane-coordinate system of the right image may be different.

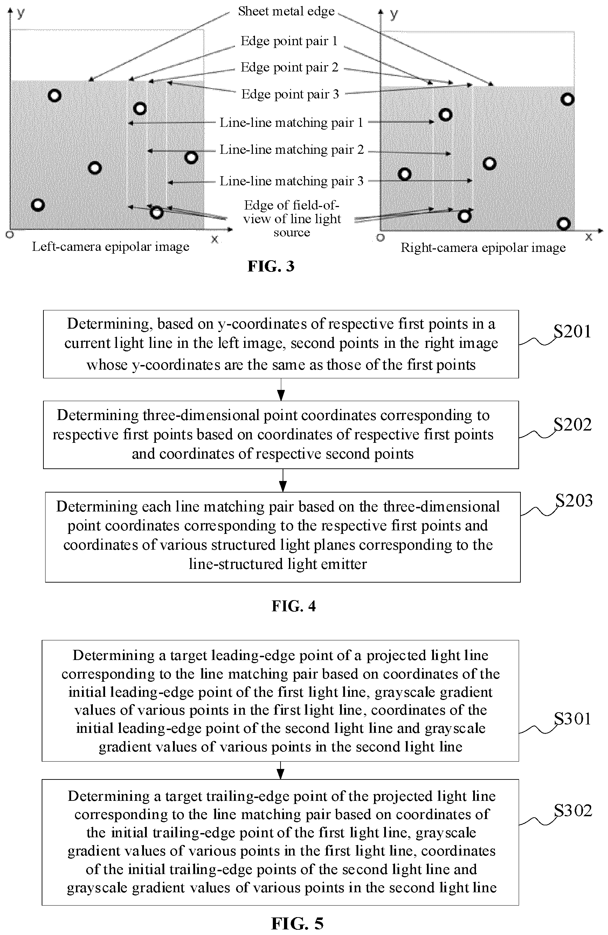

Exemplarily, the images collected by the left camera and the right camera can be shown by FIG. 3. FIG. 3 is a schematic diagram of the images collected by the left camera and the right camera provided by embodiments of the present invention. As shown in FIG. 3, the left image refers to a left-camera epipolar image in FIG. 3, and the right image refers to a right-camera epipolar image in FIG. 3. It can be seen from FIG. 3 that the left and right images may respectively include collected light lines projected by the line-structured light emitter and various mark points on the workpiece to be detected, the plane-coordinate system where the left image is located is established for the left image, and the plane-coordinate system where the right image is located is established for the right image. It is worth noting that FIG. 3 merely shows an example of the number of light lines and the number of mark points, and the light lines and the mark points may also be in other quantities, which is not limited herein.

S102, performing line-to-line matching based on at least one light line in the left image and at least one light line in the right image, so as to determine at least one line matching pair.

Herein, the line matching pair may include a first light line in the left image and a second light line in the right image, where the first light line and the second light line are derived from the same light line projected by the line-structured light emitter, and the first light line may be any light line in the left image, and the second light line may be any light line in the right image. That is to say, for the same light line projected by the line-structured light emitter on the edge of the workpiece to be detected, the first light line of this light line can be collected in the left image, and the second light line of this light line can be collected in the right image, and then the first light line in the left image and the second light line in the right image can be matched as one line matching pair.

Optionally, the number of light lines collected in the left image and the number of light lines collected in the right image may be the same or different.

Exemplarily, taking the images in FIG. 3 as an example, for instance, various light lines in the left image can be expressed by $L_i^l$, and various light lines in the right image can be expressed by $L_j^r$. Then three light lines from left to right in the left image in FIG. 3 can be expressed by $L_1^l$, $L_2^l$, and $L_3^l$, respectively, and light lines from left to right in the right image can be expressed by $L_1^r$, $L_2^r$, and $L_3^r$, respectively, and then $L_1^l$ and $L_1^r$ can be determined as a line matching pair 1; $L_2^l$ and $L_2^r$ can be determined as a line matching pair 2; and $L_3^l$ and $L_3^r$ can be determined as a line matching pair 3.

S103, determining an initial leading-edge point of a first light line, an initial leading-edge point of a second light line, an initial trailing-edge point of the first light line and an initial trailing-edge point of the second light line in each line matching pair, based on coordinate information of respective endpoints of the first light line and coordinate information of respective endpoints of the second light line in each line matching pair.

Herein, the respective endpoints may refer to start points and tail points of various light lines.

Exemplarily, taking the first light line and the second light line in the line matching pair 1 shown in FIG. 3 as an example, based on coordinate information of respective endpoints of $L_1^l$ and coordinate information of $L_1^r$ in the line matching pair 1, the initial leading-edge point of $L_1^l$ and the initial trailing-edge point of $L_1^l$, and the initial leading-edge point of $L_1^r$ and the initial trailing-edge point of $L_1^r$ in the right image can be determined.

S104, determining a target leading-edge point and a target trailing-edge point of a projected light line corresponding to each line matching pair based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair.

Herein, the projected light line corresponding to each line matching pair refers to a light line proj ected by the above line-structured light emitter on the edge of the workpiece to be detected, the left camera can collect this light line so as to obtain the first light line of this light line in the left image, and the right camera can collect this light line so as to obtain the second light line of this light line in the right image, That is to say, the first light line in the left image and the second light line in the right image are derived from the same light line projected by the line-structured light emitter.

Optionally, the target leading-edge point and the target trailing-edge point of the light line can be determined on the basis of the initial leading-edge point of the first light line, the initial trailing-edge point of the first light line, and the grayscale gradient values of various points in the first light line of the light line collected in the left image, and the initial leading-edge point of the second light line, the initial trailing-edge point of the second light line, and the grayscale gradient values of various points in the second light line of the light line collected in the second image.

S105, determining coordinates of the edge of the workpiece to be detected based on the target leading-edge point and the target trailing-edge point of the projected light line corresponding to each line matching pair.

Optionally, each line matching pair is respectively corresponding to one light line projected by the line-structured light emitter, the target leading-edge point and the target trailing-edge point of each projected light line can be obtained according to the above S103, and the coordinates of the edge of the workpiece to be detected can be determined on the basis of the target leading-edge points and the target trailing-edge points of various projected light lines. Specifically, coordinates of a leading edge of the workpiece to be detected can be determined on the basis of the target leading-edge points of various projected light lines, and coordinates of a trailing edge of the workpiece to be detected can be determined on the basis of the target trailing-edge points of various projected light lines.

In the present embodiment, the left image and the right image of the light line of the line-structured light projected on the edge of the workpiece to be detected are acquired respectively by the left and right cameras, the line matching pair is obtained by performing the line-to-line matching on the light lines collected in the left image and the right image, and the target leading-edge point and the target trailing-edge points of the projected light line corresponding to each line matching pair are obtained on the basis of the first light line and the second light line in each line matching pair, so as to obtain the coordinates of the edge of the workpiece to be detected. In this process, measurement of the workpiece edge can be realized through the line-to-line matching and edge-point identification, and the process does not need contact with the workpiece, thus avoiding measurement errors caused by workpiece deformation due to contact with the workpiece, and compared with the stereo vision-based edge measurement, measurement errors caused by viewing angle and lighting variations can be effectively avoided.

FIG. 4 is a schematic flowchart of determining line matching pairs provided by embodiments of the present invention. As shown in FIG. 4, the step of performing line-to-line matching based on at least one light line in the left image and at least one light line in the right image, so as to determine at least one line matching pair in the above S102 includes: S201, determining, based on y-coordinates of respective first points in a current light line in the left image, second points in the right image whose y-coordinates are the same as those of the first points.

Optionally, each light line in the left image and the right image consists of several points, for example,

$$L_1^l = \{(x_1, y_1)^{l1}, (x_2, y_2)^{l1}, \dots (x_k, y_k)^{l1}\}$$ , and then the light line $L_1^l$ may include k points. For each

point $(x_m, y_m)^{li}$ on each light line $L_i^l$ in the left image, a point $(x_n, y_n)^{rj}$ with the same y-coordinate as the point on the left image is searched on each light line $L_j^r$ in the right image.

Optionally, the first points in the current light line in the left image may be $(x_m, y_m)^{li}$, and the second points $(x_n, y_n)^{rj}$ with the same y-coordinate $y_m$ as the points are searched on each light line in the right image. That is to say, $y_m$ of the first points is the same as $y_n$ of the second points. Herein, the coordinates of the first points and the coordinates of the second points both refer to coordinates in a device coordinate system.

S202, determining three-dimensional point coordinates corresponding to respective first points based on coordinates of respective first points and coordinates of respective second points.

Herein, the three-dimensional point coordinates refer to three-dimensional point coordinates in the device coordinate system, and the device refers to the line-structured light device. Specifically, the three-dimensional coordinates can be calculated through Formula (I) as follows.

$$\begin{cases} Z_{mn} = Bf/[(x_m - x_{0l}) - (x_n - x_{0r})] \\ X_{mn} = Z_{mn}(x_m - x_{0l})/f \\ Y_{mn} = Z_{mn}(y_m - y_0)/f \end{cases} \qquad \text{Formula (I)}$$

The obtained three-dimensional point coordinates corresponding to respective first points are $(X_{mn}, Y_{mn}, Z_{mn})$, $x_{0l}$ is an x-coordinate of a principal point of the left image, $x_{0r}$ is an x-coordinate of a principal point of the right image, $x_m$ is an x-coordinate of respective first points in the left image, and $x_n$ is an x-coordinate of the second points in the right image with the same y-coordinate as that of respective first points.

S203, determining each line matching pair based on the three-dimensional point coordinates corresponding to the respective first points and coordinates of various structured light planes corresponding to the line-structured light emitter.

Herein, each structured light plane corresponding to the line-structured light emitter refers to a bounded plane formed by spatial extension of a light source when the line-structured light emitter projects the light line to the workpiece to be detected. As shown in FIG. 1, the number of structured light planes corresponding to the line-structured light emitter is the same as the number of light lines projected by the line-structured light emitter, that is to say, if the line-structured light emitter projects three light lines, three structured light planes are generated in space, for example, three structured light planes $\pi_1, \pi_2$, and $\pi_3$ in the device coordinate system in the drawing, where boundaries of $\pi_1$ can be expressed by $l_{1\,upper}$ and $l_{1\,lower}$, boundaries of $\pi_2$ can be expressed by $l_{2\,upper}$ and $l_{2\,lower}$, and boundaries of $\pi_3$ can be expressed by $l_{3\,upper}$ and $l_{3\,lower}$.

Optionally, the step of determining each line matching pair based on the three-dimensional point coordinates corresponding to the respective first points and coordinates of various structured light planes corresponding to the line-structured light emitter in the above S203 includes:

optionally, if the three-dimensional point coordinates corresponding to all the first points of the current light line are all located on any one of the structured light planes, determining a current light line and a line where the second points corresponding to respective first points of the current light line are located as a line matching pair, and a corresponding structured light plane as a matching plane.

Specifically, if the three-dimensional point coordinates corresponding to all the first points calculated according to $L_i^l$ and $L_j^r$ are all located on one of the structured light planes $\pi_1, \pi_2$, and $\pi_3$, $L_i^l$ and $L_j^r$ are a line matching pair, and the structured light plane on which the three-dimensional point coordinates corresponding to all the first points calculated according to $L_i^l$ and $L_j^r$ are all located is a matching plane.

In the present embodiment, various line matching pairs are determined through various points on various light lines collected from the left and right images and various structured light planes, so that measurement errors caused by vision and lighting variations can be effectively avoided.

Optionally, the step of determining an initial leading-edge point of a first light line, an initial leading-edge point of a second light line, an initial trailing-edge point of the first light line and an initial trailing-edge point of the second light line in each line matching pair based on coordinate information of respective endpoints of the first light line and coordinate information of respective endpoints of the second light line in each line matching pair in the above S103 may include:

optionally, determining a start-point coordinate and a tail-point coordinate of the first light line and a start-point coordinate and a tail-point coordinate of the second light line in each line matching pair, respectively. Herein, the start-point coordinates and the tail-point coordinates of the first light line and the start-point coordinates and the tail-point coordinates of the second light line all refer to coordinates in the device coordinate system.

For each line matching pair $L_i^l$ and $L_j^r$, the start-point coordinates and the tail-point coordinates of $L_i^l$ and the start-point coordinates and the tail-point coordinates of $L_j^r$ are determined, respectively. For example, the start-point coordinates of the first light line $L_i^l$ can be expressed by $(x, y)_s^i$, and the tail-point coordinates can be expressed by $(x, y)_e^i$; and the start-point coordinates of the second light line $L_i^r$ can be expressed by $(x, y)_s^j$, and the tail-point coordinates can be expressed by $(x, y)_e^j$.

Optionally, if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image, a first three-dimensional point corresponding to the start-point coordinates of the first light line and the start-point coordinates of the second light line is determined.

Herein, the first preset threshold can be, for example, 0.01, 0.02 or other values, that is to say, the y-coordinate in the start-point coordinates of the first light line is approximately equal to the y-coordinate in the start-point coordinates of the second light line. Boundaries of an image refer to upper, lower, left and right boundaries of the left image and the right image.

Herein, the coordinates of the first three-dimensional point corresponding to the start-point coordinates of the first light line and the start-point coordinates of the second light line can be calculated by Formula (I) in the above.

Optionally, if the first three-dimensional point is located within boundaries of the structured light plane corresponding to the line matching pair, and has a distance to the boundaries of the structured light plane greater than a second preset threshold, the start-point coordinates of the first light line are taken as coordinates of the initial leading-edge point of the first light line, and the start-point coordinates of the second light line are taken as coordinates of the initial leading-edge point of the second light line.

Herein, the structured light plane corresponding to the line matching pair refers to a structured light plane on which the three-dimensional point coordinates corresponding to all the first points calculated according to $L_i^l$ and $L_j^r$ are located, that is, a matching plane of the line matching pair. The second preset threshold may refer to a distance value, for example, a value such as 0.1 cm or 0.2 cm, and other values can also be set. That is to say, when a first three-dimensional point is located within boundaries of a matching plane corresponding to the three-dimensional point, and it has a certain distance to upper, lower, left and right boundaries of a matching structured light plane, a position of the first three-dimensional point is determined as an edge point, and the start-point coordinates $(x, y)_s^i$ of the first light line $L_i^l$ are taken as coordinates of the initial leading-edge point of the first light line, the start-point coordinates $(x, y)_s^j$ of the second light line $L_i^r$ are taken as coordinates of the initial leading-edge point of the second light line, and then $(x, y)_s^i$ and $(x, y)_s^j$ are determined as an initial leading-edge point pair.

Optionally, if a difference between y-coordinate in the tail-point coordinates of the first light line and y-coordinate in the tail-point coordinates of the second light line is less than a first preset threshold, the y-coordinate in the tail-point coordinates of the first light line is not located on boundaries of the left image, and the y-coordinate in the tail-point coordinates of the second light line is not located on boundaries of the right image, a second three-dimensional point corresponding to the tail-point coordinates of the first light line and the tail-point coordinates of the second light line is determined.

Herein, the first preset threshold can be, for example, 0.01, 0.02 or other values, that is to say, the y-coordinate in the tail-point coordinates of the first light line is approximately equal to the y-coordinate in the tail-point coordinates of the second light line. Boundaries of an image refer to upper, lower, left and right boundaries of the left image and the right image.

Herein, the coordinates of the second three-dimensional point corresponding to the tail-point coordinates of the first light line and the tail-point coordinates of the second light line can be calculated by Formula (I) in the above.

Optionally, if the second three-dimensional point is located within boundaries of the structured light plane corresponding to the line matching pair, and has a distance to the boundaries of the structured light plane greater than a second preset threshold, the tail-point coordinates of the first light line are taken as coordinates of the initial trailing-edge point of the first light line, and the tail-point coordinates of the second light line are taken as the coordinates of the initial trailing-edge point of the second light line.

Herein, the structured light plane corresponding to the line matching pair refers to a structured light plane on which the three-dimensional point coordinates corresponding to all the first points calculated according to $L_i^l$ and $L_j^r$ in the preceding are located, i.e., a matching plane of the line matching pair. The second preset threshold may refer to a distance value, for example, a value such as 0.1 cm or 0.2 cm, and other values can also be set. That is to say, when a second three-dimensional point is located within boundaries of a matching plane corresponding to the three-dimensional point, and it has a certain distance to upper, lower, left and right boundaries of a matching structured light plane, a position of the second three-dimensional point is determined as an edge point, the tail-point coordinates $(x, y)_e^i$ of the first light line $L_i^l$ are taken as coordinates of the initial trailing-edge point of the first light line, the tail-point coordinates $(x, y)_e^j$ of the second light line $L_j^r$ are taken as coordinates of the initial trailing-edge point of the second light line, and then $(x, y)_e^i$ and $(x, y)_e^j$ are determined as an initial trailing-edge point pair.

It is worth noting that for each line matching pair, the initial leading-edge point pair and/or the initial trailing-edge point pair of each line matching pair can be determined by the above method, that is to say, for each line matching pair, if the start-point coordinates of the first light line, the start-point coordinates of the second light line, the tail-point coordinates of the first light line and the tail-point coordinates of the second light line in the line matching pair all meet the above conditions, the initial leading-edge point pair and the initial trailing-edge point pair of the line matching pair can be determined; if the start-point coordinates of the first light line and the start-point coordinates of the second light line in the line matching pair meet the above conditions, but the tail-point coordinates of the first light line and the tail-point coordinates of the second light line fail to meet the above conditions, it can be determined that the initial leading-edge point pair of the line matching pair is obtained; if the start-point coordinates of the first light line and the start-point coordinates of the second light line in the line matching pair fail to meet the above conditions, but the tail-point coordinates of the first light line and the tail-point coordinates of the second light line meet the above conditions, it can be determined that the initial trailing-edge point pair of the line matching pair is obtained. Herein, the above conditions refer to: if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image, a first three-dimensional point corresponding to the start-point coordinates of the first light line and the start-point coordinates of the second light line is determined; and if the first three-dimensional point is located within boundaries of the structured light plane corresponding to the line matching pair, and has a distance to the boundaries of the structured light plane greater than a second preset threshold.

Exemplarily, further taking the above FIG. 3 as an example, if the start-point coordinates of the first light line and the start point of the second light line in each line matching pair in the left image and the right image meet the above conditions, the start-point coordinates of the first light line in each line matching pair can be taken as the initial leading-edge point of the first light line, and the start-point coordinates of the second light line can be taken as the initial leading-edge point of the second light line. If the tail-point coordinates of the first light line and the tail-point coordinates of the second light line in each line matching pair are located at an edge of a field of view of a line light source, the first light line and the second light line in each line matching pair do not have the initial trailing-edge point of each line matching pair, that is to say, it can be determined from FIG. 3.

FIG. 5 is a schematic flowchart of another workpiece edge measurement method provided by embodiments of the present invention. As shown in FIG. 5, the step of determining a target leading-edge point and a target trailing-edge point of a projected light line corresponding to each line matching pair based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair in the above S104 can include:

S301, determining a target leading-edge point of a projected light line corresponding to the line matching pair based on coordinates of the initial leading-edge point of the first light line, grayscale gradient values of various points in the first light line, coordinates of the initial leading-edge point of the second light line and grayscale gradient values of various points in the second light line.

As can be seen from the above S104, the projected light line corresponding to each line matching pair refers to the same light line collected by the left camera and the right camera projected by the line-structured light emitter on the edge of the workpiece to be detected, that is to say, the first light line in the left image and the second light line in the right image are derived from the same light line projected by the line-structured light emitter.

Specifically, the target leading-edge point of the projected light line corresponding to the line matching pair of the first light line and the second light line can be determined on the basis of the coordinates $(x, y)^i_s$ of the initial leading-edge point of the first light line $L^l_i$, grayscale gradient values of various points in the first light line, the coordinates $(x, y)^j_s$ of the initial leading-edge point of the second light line $L^r_j$ and grayscale gradient values of various points in the second light line. Herein, the determined target leading-edge point refers to three-dimensional coordinates of the target leading-edge point in the device coordinate system.

S302, determining a target trailing-edge point of the projected light line corresponding to the line matching pair based on coordinates of the initial trailing-edge point of the first light line, grayscale gradient values of various points in the first light line, coordinates of the initial trailing-edge points of the second light line and grayscale gradient values of various points in the second light line.

Specifically, the target trailing-edge point of the projected light line corresponding to the line matching pair of the first light line and the second light line can be determined on the basis of the coordinates $(x, y)^i_e$ of the initial trailing-edge point of the first light line $L^l_i$, grayscale gradient values of various points in the first light line, the coordinates $(x, y)^j_e$ of the initial trailing-edge point of the second light line $L^r_j$ and grayscale gradient values of various points in the second light line. Herein, the determined target trailing-edge point refers to three-dimensional coordinates of the target trailing-edge point in the device coordinate system.

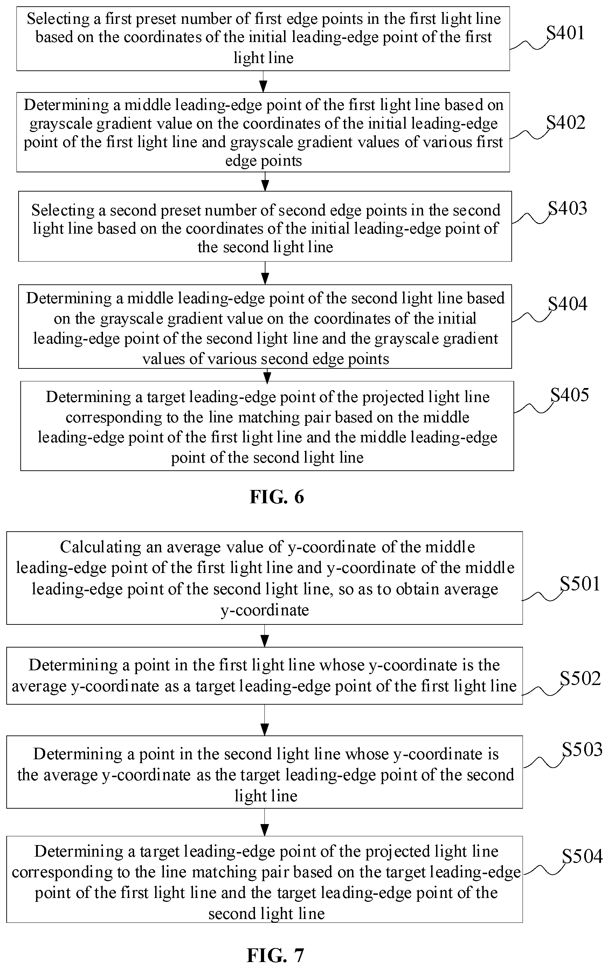

FIG. 6 is a schematic flowchart of a further workpiece edge measurement method provided by embodiments of the present invention. As shown in FIG. 6, the step of determining a target leading-edge point of a projected light line corresponding to the line matching pair based on coordinates of the initial leading-edge point of the first light line, grayscale gradient values of various points in the first light line, coordinates of the initial leading-edge point of the second light line and grayscale gradient values of various points in the second light line in the above S301 includes:

S401, selecting a first preset number of first edge points in the first light line based on the coordinates of the initial leading-edge point of the first light line.

Herein, the first preset number may be other edge points in the vicinity of the initial leading-edge point, and the first preset number may be, for example, 3, 4, 5, etc., and other values can also be set, which is not limited herein.

Exemplarily, four first edge points that are close to the initial leading-edge point can be selected from the first light line. For example, the coordinates of the initial leading-edge point of the first light line $L_i^l$ are $(x_1, y_1)_s^1$, and based on the coordinates of the initial leading-edge point, coordinates of the other four edge points selected can be $(x_2, y_2)_s^2, (x_3, y_3)_s^3, (x_4, y_4)_s^4$, and $(x_5, y_5)_s^5$, respectively.

Exemplarily, if the coordinates of the initial leading-edge point of the first light line $L_i^l$ are $(x_3, y_3)_s^3$, based on the coordinates of the initial leading-edge point, coordinates of the other four edge points selected cab be, for example, $(x_1, y_1)_s^1, (x_2, y_2)_s^2$, and $(x_5, y_5)_s^5$, respectively.

S402, determining a middle leading-edge point of the first light line based on grayscale gradient value on the coordinates of the initial leading-edge point of the first light line and grayscale gradient values of various first edge points.

Specifically, the grayscale gradient values on various point coordinates can be calculated using Formula (II) as follows.

$$\begin{cases} g_t = abs(I(x_{t+1}, y_{t+1}) - I(x_{t-1}, y_{t-1})), 1 < t < k \\ g_1 = abs(I(x_2, y_2) - max(I(x_1 - 1, y_1 - 1), I(x_1, y_1 - 1), I(x_1 + 1, y_1 - 1))) \\ g_k = abs(max(I(x_k - 1, y_k + 1), I(x_1, y_k + 1), I(x_1 + 1, y_k + 1)) - I(x_{k-1}, y_{k-1})) \end{cases}$$

Formula (II)

Herein, ads() means taking an average value, max() means taking a maxima, $g_1$ refers to a grayscale gradient value of a first edge point of the light line along a light projection direction, $g_k$ refers to a grayscale gradient value of a last edge point of the light line along the light projection direction, and $g_t$ refers to a grayscale gradient value of an edge point between the first edge point and the last edge point.

Optionally, when the grayscale gradient value on the coordinates of the initial leading-edge point and the grayscale gradient values of various first edge points of the first light line are obtained by calculation, by a weighted averaging or function fitting method, an edge point with a sub-pixel gradient maxima can be selected as a middle leading-edge point of the first light line, and coordinates of the middle leading-edge point of the first light line are determined, where the coordinates refer to coordinates in the device coordinate system.

S403, selecting a second preset number of second edge points in the second light line based on the coordinates of the initial leading-edge point of the second light line.

Herein, the second preset number may be other edge points in the vicinity of the initial leading-edge point, and the second preset number may be, for example, 3, 4, 5, etc., and other values can also be set, which is not limited herein.

The method for selecting the second edge points is the same as the method for selecting the first edge points in the above S401, and is not repeated herein.

S404, determining a middle leading-edge point of the second light line based on the grayscale gradient value on the coordinates of the initial leading-edge point of the second light line and the grayscale gradient values of various second edge points.

The method for determining the middle leading-edge point of the second light line is the same as the method for determining the middle leading-edge point of the first light line in the preceding S402, and is not repeated herein.

S405, determining a target leading-edge point of the projected light line corresponding to the line matching pair based on the middle leading-edge point of the first light line and the middle leading-edge point of the second light line.

Specifically, the coordinates of the target leading-edge point of the projected light line corresponding to the line matching pair can be determined according to the coordinates of the middle leading-edge point of the first light line and the coordinates of the middle leading-edge point of the second light line.

It is worth noting that the target leading-edge point corresponding to one line matching pair is calculated in the above S401-S405, and the target trailing-edge point of the projected light line corresponding to the line matching pair can also be calculated by the above method, which is not repeated herein. For each line matching pair, the target leading-edge point and/or the target trailing-edge point of the projected light line corresponding to the line matching pair can be obtained.

FIG. 7 is a schematic flowchart of a further workpiece edge measurement method provided by embodiments of the present invention. As shown in FIG. 7, the step of determining a target leading-edge point of the projected light line corresponding to the line matching pair based on the middle leading-edge point of the first light line and the middle leading-edge point of the second light line in the above S405 may include:

S501, calculating an average value of y-coordinate of the middle leading-edge point of the first light line and y-coordinate of the middle leading-edge point of the second light line, so as to obtain average y-coordinate.

Specifically, if the y-coordinate of the middle leading-edge point of the first light line is $y^i$, and the y-coordinate of the middle leading-edge point of the second light line is $y^j$, an average value of $y^i$ and $y^j$ is calculated, where $\bar{y} = (y^i + y^j)/2$.

S502, determining a point in the first light line whose y-coordinate is the average y-coordinate as a target leading-edge point of the first light line.

Optionally, based on the calculated average y-coordinate, a sub-pixel grayscale maxima column, i.e., x-coordinate of points with the sub-pixel grayscale maxima, is found in the first light line via gray centroid or function fitting.

Exemplarily, for the left image, x-coordinate, for example, $x_1$, of a point with y=int($\bar{y}$ + 0.5) is found in a light line $Li^l$, then grayscale values $I_{1l}$, $I_{2l}$, $I_{3l}$, $I_{4l}$, and $I_{5l}$ at $(x_l-2, \bar{y})$, $(x_l-1, \bar{y})$, $(x_l, \bar{y})$, $(x_l+1, \bar{y})$, and $(x_l+2, \bar{y})$ on the left image can be obtained, and by fitting parabola I = $f(x)$ = $ax^2 + bx + c$ by the least squares method, $\widehat{x_l} = -b/2a$ is taken as the x-coordinate of the points with the grayscale maxima. Then, it can be obtained that the coordinates of the target leading-edge point of the first light line may be ( $\widehat{x_l}$ , $\bar{y}$).

S503, determining a point in the second light line whose y-coordinate is the average y-coordinate as the target leading-edge point of the second light line.

Optionally, the method for determining the target leading-edge point of the second light line is the same as the method in the above S502, and is not repeated herein.

Exemplarily, it can be obtained by the above method that coordinates of the target leading-edge point of the second light line are ( $\widehat{x_r}$ , $\bar{y}$).

Herein, the coordinates of the target leading-edge point of the first light line and the coordinates of the target leading-edge point of the second light line are both two-dimensional coordinates in the device coordinate system.

S504, determining a target leading-edge point of the projected light line corresponding to the line matching pair based on the target leading-edge point of the first light line and the target leading-edge point of the second light line.

Herein, the determined target leading-edge point of the projected light line corresponding to the line matching pair refers to three-dimensional coordinates in the device coordinate system. Specifically, the three-dimensional coordinates of the target leading-edge point of the projected light line corresponding to the line matching pair in the device coordinate system can be calculated using Formula (I) in the above.

Specifically, the coordinates ( $\widehat{x_l}$ , $\bar{y}$) of the target leading-edge point of the first light line and the coordinates ( $\widehat{x_r}$ , $\bar{y}$) of the target leading-edge point of the second light line can put into Formula (I) in the above, and the three-dimensional coordinates of the target leading-edge point of the projected light line corresponding to the line matching pair can be obtained as $P_C$ ($X_C$, $Y_C$, Zc).

It is worth noting that the target leading-edge point of the projected light line corresponding to one line matching pair is calculated in the above S501-S502, and target leading-edge points of the projected light lines corresponding to other line matching pairs are calculated in the same way; and the method for calculating the target trailing-edge points of the projected light lines corresponding to various line matching pairs is also the same, which is not repeated herein.

According to the present embodiment, the three-dimensional coordinates of the target leading-edge points and/or the target trailing-edge points of the projected light lines corresponding to various line matching pairs in the device coordinate system can be obtained.

The three-dimensional coordinates of the target leading-edge point and/or the target trailing-edge point of the projected light line corresponding to each line matching pair in the device coordinate system obtained in the above refer to the target leading-edge point and/or the target trailing-edge point of at least one light line projected by the line-structured light device to the edge of the workpiece to be detected in different positions at different time instants. The three-dimensional coordinates of the target leading-edge point and/or the target trailing-edge point in the device coordinate system. The three-dimensional coordinates of the target leading-edge point and/or the target trailing-edge point of the projected light line corresponding to each line matching pair in the device coordinate system, obtained by the line-structured light device in different positions at different time instants, need to be transformed into a world coordinate system, so as to obtain complete edges of the workpiece to be detected.

Optionally, when the three-dimensional coordinates of the target leading-edge point in the device coordinate system are transformed into the world coordinates, the three-dimensional coordinates of the target leading-edge point in the device coordinate system, collected and calculated by the line-structured light device, are transformed into the world coordinates based on a real-time position of the line-structured light device.

Optionally, it can be seen from the above S101 that the images of the line-structured light collected in different positions further include the information of the preset mark points, where information of world three-dimensional coordinates of the preset mark points can be collected in advance, and can be expressed by $M_w=\{P_{w1}, P_{w2},...,P_{wn}\}$.

When the left and right cameras within the line-structured light device are used to collect images of the edge of the workpiece to be detected, coordinates of a first mark point among various mark points in the left image collected by the left camera and coordinates of a second mark point among various mark points in the right image collected by the right camera at the same time instant can be obtained, where the first mark point in the collected left image and the second mark point in the right image are derived from the same mark point on the edge of the workpiece to be detected. The coordinates of the first mark point and the coordinates of the second mark point refer to two-dimensional coordinates in the device coordinate system.

Optionally, resolution is performed on the coordinates of the collected mark points, so as to obtain the three-dimensional coordinates of various mark points in the device coordinate system, which may include the following.

Optionally, the three-dimensional coordinates of various mark points in the device coordinate system can be obtained according to the coordinates of the first mark point among various mark points in the left image and the coordinates of the second mark point among various mark points in the right image. Specifically, the three-dimensional coordinates of various mark points in the device coordinate system can be calculated using Formula (I) in the above. For example, the three-dimensional coordinates of various mark points at a certain time instant t in the device coordinate system are calculated as $M_c^t$={Pc1$^t$, Pc2$^t$, ..., Pck$^t$}.

Optionally, the three-dimensional coordinates of various mark points in the device coordinate system and the world coordinates of various mark points are aligned (registered), so as to resolve pose parameters of the line-structured light device at different time instants.

Specifically, a rotation matrix and a translation vector at the time instant t can be obtained on the basis of the three-dimensional coordinates Pci$^t$ of various mark points in the device coordinate system and the world coordinate $P_i$ of various mark points, where the rotation matrix can be expressed by R$^t$, and the translation vector can be expressed by T$^t$, then a coordinate transformation formula $P_W = R^t P_C^t + T^t$ can be obtained, where $P_C^t$ is the three-dimensional coordinates of various points in the device coordinate system, and $P_w$ is the world coordinate of various points. That is to say, by aligning the mark points $M_C^t$ in the device coordinate system and the mark points $M_w$ in the world coordinate system, the pose parameters of the structured light device in the world coordinate system at the time instant t, i.e., the rotation matrix R$^t$ and the translation vector T$^t$, can be obtained.

Optionally, based on the pose parameters of the line-structured light device at different time instants, the three-dimensional coordinates of the target leading-edge points and/or the target trailing-edge points of the projected light lines corresponding to various line matching pairs in the device coordinate system, obtained by the line-structured light device at different time instants, are transformed into the world coordinates.

Specifically, the three-dimensional coordinates $P_C$ ($X_C$, $Y_C$, $Z_C$) of the target leading-edge points of the projected light lines corresponding to various line matching pairs can be put into the above transformation formula, so as to obtain the world coordinates $P_w$ of the target leading-edge points, so that coordinates of a leading edge of the workpiece to be detected can be determined on the basis of the world coordinates of the target leading-edge points of the projected light lines corresponding to various line matching pairs obtained by the line-structured light device in different positions at different time instants.

For the target trailing-edge points corresponding to various line matching pairs, the world coordinates of various target trailing-edge points are also obtained through the transformation formula, so that coordinates of the trailing edge of the workpiece to be detected can be determined on the basis of the world coordinates of the target trailing-edge points of the projected light lines corresponding to various line matching pairs obtained by the line-structured light device in different positions at different time instants.

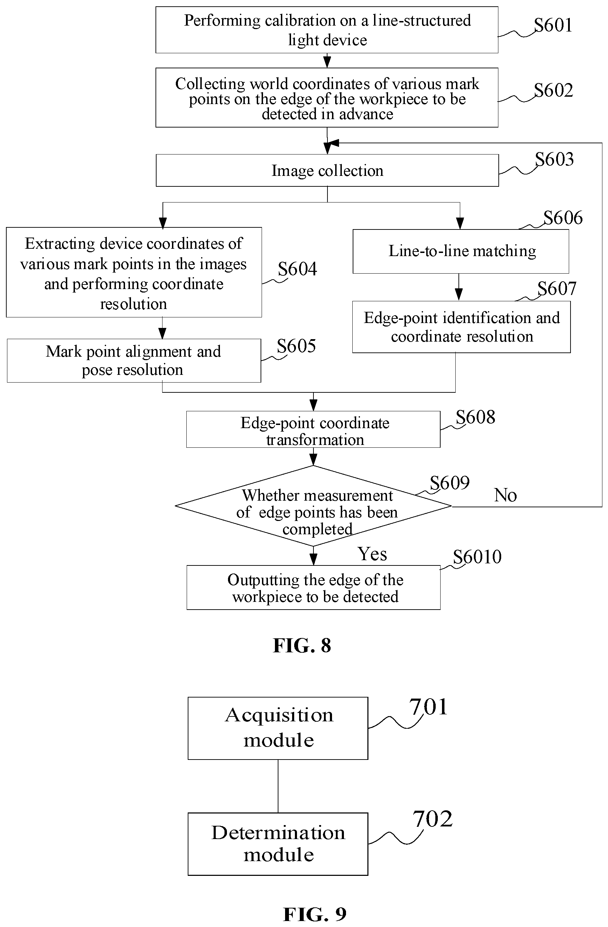

In order to more clearly illustrate the method for determining an edge of a workpiece to be detected in the above embodiments, FIG. 8 can be used for illustration. FIG. 8 is a complete schematic flowchart of a workpiece edge measurement method provided by embodiments of the present invention. As shown in FIG. 8:

In S601, calibration is performed on a line-structured light device.

In S602, world coordinates of various mark points on the workpiece whose edge is going to be detected are collected in advance.

In S603, images are collected.

A left image and a right image collected by a binocular camera are acquired.

In S604, device coordinates of various mark points in the images are extracted, and coordinate resolution is performed.

Specifically, the coordinates of various mark points in the left image and the right image are extracted and the coordinate resolution is performed, so as to obtain the three-dimensional coordinates of various mark points in the device coordinate system, which is not repeated herein again.

In S605, the mark points are aligned so as to resolve a pose.

It refers to resolving pose parameters of the line-structured light device when collecting the images on the basis of the three-dimensional coordinates of various mark points in the device coordinate system and the world coordinates of various mark points collected in advance. A specific process has been described in detail in the above embodiments, and is not repeated herein.

In S606, line-to-line matching is performed.

Optionally, a process of the line-to-line matching has been described in detail in the above embodiments, and is not repeated herein.

In S607, edge-point identification and coordinate resolution are performed.

Herein, the edge-point identification refers to a process of determining a middle leading-edge point and/or a middle trailing-edge point of a first light line, and a middle leading-edge point and/or a middle trailing-edge point of a second light line in each line matching pair in the above; and the coordinate resolution refers to a process of determining three-dimensional coordinates of a target leading-edge point and/or a target trailing-edge point of a projected light line corresponding to each line matching pair in the device coordinate system in the above, which is not repeated herein.

In S608, edge-point coordinates are transformed.

Optionally, the process refers to a process of transforming three-dimensional coordinates of the target leading-edge point and/or the target trailing-edge point of the projected light line corresponding to each line matching pair in the device coordinate system into world coordinates on the basis of the pose parameters of the line-structured light device at various time instants, which is not repeated herein.

In S609, whether measurement of edge points has been completed is determined.

If detection of the edge of the workpiece to be detected is not completed, a position of the line-structured light device is changed, and the above steps S603-S609 are performed again, until the detection of the edge of the workpiece to be detected is completed.

In S6010, the edge of the workpiece to be detected is output.

Calculation in the above S604-S605 and S606-S607 can be performed concurrently.

FIG. 9 is a schematic diagram of an apparatus for the workpiece edge measurement method provided by embodiments of the present invention. As shown in FIG. 9, the apparatus includes:

an acquisition module 701, configured to acquire a left image and a right image of an edge of a workpiece to be detected that are collected by the binocular camera, where the left image and the right image respectively include at least one light line projected by the line-structured light emitter;

a determination module 702, configured to perform line-to-line matching based on at least one light line in the left image and at least one light line in the right image, so as to determine at least one line matching pair, where the line matching pair includes a first light line in the left image and a second light line in the right image, and the first light line and the second light line are derived from the same light line projected by the line-structured light emitter;

the determination module 702, configured to, based on coordinate information of respective endpoints of the first light line and coordinate information of respective endpoints of the second light line in each line matching pair, determine an initial leading-edge point of a first light line, an initial leading-edge point of a second light line, an initial trailing-edge point of the first light line and an initial trailing-edge point of the second light line in each line matching pair;

the determination module 702, configured to determine a target leading-edge point and a target trailing-edge point of a projected light line corresponding to each line matching pair based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair; and

the determination module 702, configured to determine coordinates of the edge of the workpiece to be detected based on the target leading-edge point and the target trailing-edge point of the projected light line corresponding to each line matching pair.

Optionally, the determination module 702 is specifically configured to:

determine, based on y-coordinates of respective first points in a current light line in the left image, second points in the right image whose y-coordinates are the same as those of the first points;

determine three-dimensional point coordinates corresponding to respective first points based on coordinates of respective first points and coordinates of respective second points; and

determine each line matching pair based on the three-dimensional point coordinates corresponding to the respective first points and coordinates of various structured light planes corresponding to the line-structured light emitter.

Optionally, the determination module 702 is specifically configured to:

determine, if the three-dimensional point coordinates corresponding to all the first points of the current light line are all located on any one of the structured light planes, the current light line and a line where second points corresponding to respective first points of the current light line are located as a line matching pair.

Optionally, the determination module 702 is specifically configured to:

determine a start-point coordinate and a tail-point coordinate of the first light line and a start-point coordinate and a tail-point coordinate of the second light line in each line matching pair, respectively;

determine a first three-dimensional point corresponding to start-point coordinates of the first light line and start-point coordinates of the second light line, if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image;

take the start-point coordinates of the first light line as coordinates of the initial leading-edge point of the first light line, and take the start-point coordinates of the second light line as coordinates of the initial leading-edge point of the second light line, if the first three-dimensional point is located within boundaries of the structured light plane corresponding to the line matching pair, and has a distance to the boundaries of the structured light plane greater than a second preset threshold;

determine a first three-dimensional point corresponding to tail-point coordinates of the first light line and tail-point coordinates of the second light line, if a difference between y-coordinate in the tail-point coordinates of the first light line and y-coordinate in the tail-point coordinates of the second light line is less than a first preset threshold, the y-coordinate in the tail-point coordinates of the first light line is not located on boundaries of the left image, and y-coordinate in the tail-point coordinates of the second light line is not located on boundaries of the right image; and

take the tail-point coordinates of the first light line as coordinates of the initial trailing-edge point of the first light line, and take the tail-point coordinates of the second light line as the coordinates of the initial trailing-edge point of the second light line, if the first three-dimensional point is located within boundaries of the structured light plane corresponding to the line matching pair, and has a distance to the boundaries of the structured light plane greater than a second preset threshold.

Optionally, the determination module 702 is specifically configured to:

determine a target leading-edge point of a projected light line corresponding to the line matching pair based on the coordinates of the initial leading-edge point of the first light line, grayscale gradient values of various points in the first light line, coordinates of the initial leading-edge point of the second light line and grayscale gradient values of various points in the second light line; and

determine a target trailing-edge point of the projected light line corresponding to the line matching pair based on coordinates of the initial trailing-edge point of the first light line, grayscale gradient values of various points in the first light line, coordinates of the initial trailing-edge point of the second light line and grayscale gradient values of various points in the second light line.

Optionally, the determination module 702 is specifically configured to:

select a first preset number of first edge points in the first light line based on the coordinates of the initial leading-edge point of the first light line;

determine a middle leading-edge point of the first light line based on grayscale gradient value on the coordinates of the initial leading-edge point of the first light line and grayscale gradient values of various first edge points;

select a second preset number of second edge points in the second light line based on the coordinates of the initial leading-edge point of the second light line;

determine a middle leading-edge point of the second light line based on the grayscale value on the coordinates of the initial leading-edge point of the second light line and the grayscale values of various second edge points; and

determine a target leading-edge point of the projected light line corresponding to the line matching pair based on the middle leading-edge point of the first light line and the middle leading-edge point of the second light line.

Optionally, the determination module 702 is specifically configured to:

calculate an average value of y-coordinate of the middle leading-edge point of the first light line and y-coordinate of the middle leading-edge point of the second light line, so as to obtain average y-coordinate;

determine a point in the first light line whose y-coordinate is the average y-coordinate as a target leading-edge point of the first light line;

determine a point in the second light line whose y-coordinate is the average y-coordinate as the target leading-edge point of the second light line; and

determine a target leading-edge point of the projected light line corresponding to the line matching pair based on the target leading-edge point of the first light line and the target leading-edge point of the second light line.

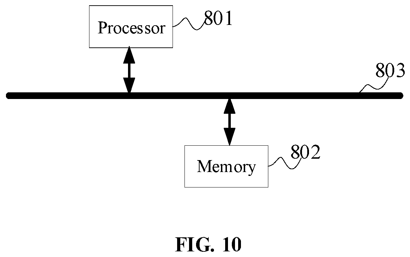

FIG. 10 is a structural block diagram of an electronic device 800 provided by embodiments of the present invention. As shown in FIG. 10, the electronic device may include: a processor 801 and a memory 802.

Optionally, the electronic device may further include a bus 803, where the memory 802 is configured to store machine-readable instructions executable by the processor 801, and when the electronic device 800 runs, the processor 801 communicates with the memory 802 through the bus 803, and the machine-readable instructions, when executed by the processor 401, execute the method steps in the method embodiments in the above.

Embodiments of the present invention further provide a computer-readable storage medium, on which a computer program is stored, and the computer program, when executed by a processor, executes the method steps in the above workpiece edge measurement method.

It would be clear to those skilled in the art that, for the convenience and brevity of the description, reference can be made to corresponding processes in the method embodiments for specific operation processes of the system and apparatus described in the above, and details will not be given herein. In the several embodiments provided in the present invention, it should be understood that the system, apparatus and method disclosed can be implemented in other ways. The apparatus embodiments described in the above are merely exemplary, for example, the modules are merely divided according to logical functions, but they may be divided in other ways in practical implementation. For another example, a plurality of modules or components can be combined or integrated into another system, or some features can be omitted or not executed. In addition, a mutual coupling, direct coupling or communication connection shown or discussed can be an indirect coupling or communication connection through some communication interfaces, means or modules, and may be in an electrical form, a mechanical form or other forms.

Besides, various functional units in various embodiments of the present invention can be integrated into one processing unit, each unit can also exist physically independently, or two or more units can also be integrated into one unit. The functionality, when implemented as a software functional unit and sold or used as a stand-alone product, can be stored in a computer-readable storage medium. Based on such understanding, the technical solutions of the present invention in essence or parts making contribution to the prior art or parts of the technical solutions can be embodied in form of a software product, and this computer software product is stored in a storage medium, including several instructions for making a computer device (which may be a personal computer, a server or a network device, etc.) execute all or part of the steps of the method of the embodiments of the present invention. The aforementioned storage medium includes various media in which program codes can be stored, such as USB flash disk, mobile hard disk, read-only memory (ROM), random access memory (RAM), diskette and compact disk.

The above are merely specific embodiments of the present invention, but the scope of protection of the present invention is not limited thereto, and modifications or substitutions that would readily conceivable to those skilled in the art within the technical scope disclosed in the present invention should fall within the scope of protection of the present invention.

INDUSTRIAL APPLICABILITY

The present invention provides a workpiece edge measurement method and apparatus, an electronic device and a storage medium. According to the technical solutions provided by the present invention, the left image and the right image of the light line of the line-structured light projected on the edge of the workpiece to be detected are acquired respectively by the left and right cameras, the line matching pair is obtained by performing the line-to-line matching on the light lines collected in the left image and the right image, and the target leading-edge point and the target trailing-edge points of the projected light line corresponding to each line matching pair are obtained on the basis of the first light line and the second light line in each line matching pair, so as to obtain the coordinates of the edge of the workpiece to be detected. In this process, measurement of the edge of the workpiece can be realized through the line-to-line matching and edge-point identification, and the process does not need contact with the workpiece, thus avoiding measurement errors caused by deformation of the workpiece due to contact with the workpiece, and compared with the stereo vision-based edge measurement, measurement errors caused by viewing angle and lighting variations can be effectively avoided.

Besides, it can be understood that the workpiece edge measurement method and apparatus, an electronic device and a storage medium provided in the present invention are reproducible, and can be applied in various industrial applications. For example, the workpiece edge measurement method and apparatus, the electronic device and the storage medium provided in the present invention can be used in the field of industrial measurement.

**Claims**

1. A workpiece edge measurement method, **characterized by** applied to a control device in a binocular line-structured light measurement system, wherein the binocular line-structured light measurement system comprises a line-structured light device, a pose measurement device and the control device, wherein the line-structured light device comprises a binocular camera and a line-structured light emitter, and the method comprises steps of:

acquiring a left image and a right image of an edge of a workpiece to be detected that are collected by the binocular camera, wherein the left image and the right image respectively comprise at least one light line projected by the line-structured light emitter;

performing line-to-line matching based on at least one light line in the left image and at least one light line in the right image, so as to determine at least one line matching pair, wherein the line matching pair comprises a first light line in the left image and a second light line in the right image, and the first light line and the second light line are derived from the same light line projected by the line-structured light emitter;

determining an initial leading-edge point of a first light line, an initial leading-edge point of a second light line, an initial trailing-edge point of the first light line and an initial trailing-edge point of the second light line in each line matching pair, based on coordinate information of respective endpoints of the first light line and coordinate information of respective endpoints of the second light line in each line matching pair;

determining a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair; and

determining coordinates of the edge of the workpiece to be detected, based on the target leading-edge point and the target trailing-edge point of the projected light line corresponding to each line matching pair.

2. The workpiece edge measurement method according to claim 1, wherein the step of performing line-to-line matching based on at least one light line in the left image and at least one light line in the right image, so as to determine at least one line matching pair, comprises:

determining, based on y-coordinates of respective first points in a current light line in the left image, second points in the right image whose y-coordinates are the same as those of the first points;

determining three-dimensional point coordinates corresponding to the respective first points based on coordinates of the respective first points and coordinates of respective second points;

determining each line matching pair based on the three-dimensional point coordinates corresponding to the respective first points and coordinates of various structured light planes corresponding to the line-structured light emitter.

3. The workpiece edge measurement method according to claim 2, wherein the step of determining each line matching pair based on the three-dimensional coordinates corresponding to the respective first points and coordinates of structured light plane corresponding to the line-structured light emitter comprises:

determining the current light line and a line where the second points corresponding to respective first points of the current light line are located, as a line matching pair, if the three-dimensional point coordinates corresponding to all the first points of the current light line are all located on any one of the structured light planes,.

4. The workpiece edge measurement method according to claim 1, wherein the step of determining an initial leading-edge point of a first light line, an initial leading-edge point of a second light line, an initial trailing-edge point of the first light line and an initial trailing-edge point of the second light line in each line matching pair, based on coordinate information of respective endpoints of the first light line and coordinate information of respective endpoints of the second light line in each line matching pair, comprises:

determining a start-point coordinate and a tail-point coordinate of the first light line and a start-point coordinate and a tail-point coordinate of the second light line in each line matching pair, respectively;

determining a first three-dimensional point corresponding to start-point coordinates of the first light line and start-point coordinates of the second light line, if a difference between y-coordinate in the start-point coordinates of the first light line and y-coordinate in the start-point coordinates of the second light line is less than a first preset threshold, the y-coordinate in the start-point coordinates of the first light line is not located on boundaries of the left image, and the y-coordinate in the start-point coordinates of the second light line is not located on boundaries of the right image;

taking the start-point coordinates of the first light line as coordinates of an initial leading-edge point of the first light line, and taking the start-point coordinates of the second light line as coordinates of an initial leading-edge point of the second light line, if the first three-dimensional point is located within boundaries of a structured light plane corresponding to the line matching pair, and has a distance to the boundaries of the structured light plane greater than a second preset threshold;

determining a first three-dimensional point corresponding to tail-point coordinates of the first light line and tail-point coordinates of the second light line, if a difference between y-coordinate in the tail-point coordinates of the first light line and y-coordinate in the tail-point coordinates of the second light line is less than a first preset threshold, the y-coordinate in the tail-point coordinates of the first light line is not located on boundaries of the left image, and y-coordinate in the tail-point coordinates of the second light line is not located on boundaries of the right image; and

taking the tail-point coordinates of the first light line as coordinates of the initial trailing-edge point of the first light line, and taking the tail-point coordinates of the second light line as coordinates of the initial trailing-edge point of the second light line, if the first three-dimensional point is located within boundaries of the structured light plane corresponding to the line matching pair, and has a distance to the boundaries of the structured light plane greater than a second preset threshold.

5. The workpiece edge measurement method according to claim 1, wherein the step of determining a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair, comprises:

determining a target leading-edge point of a projected light line corresponding to the line matching pair, based on coordinates of the initial leading-edge point of the first light line, grayscale gradient values of various points in the first light line, coordinates of the initial leading-edge point of the second light line and grayscale gradient values of various points in the second light line; and

determining a target trailing-edge point of the projected light line corresponding to the line matching pair, based on coordinates of the initial trailing-edge point of the first light line, grayscale gradient values of various points in the first light line, coordinates of the initial trailing-edge points of the second light line and grayscale gradient values of various points in the second light line.

6. The workpiece edge measurement method according to claim 5, wherein the step of determining a target leading-edge point of a projected light line corresponding to the line matching pair, based on coordinates of the initial leading-edge point of the first light line, grayscale gradient values of various points in the first light line, coordinates of the initial leading-edge point of the second light line and grayscale gradient values of various points in the second light line comprises:

selecting a first preset number of first edge points in the first light line based on the coordinates of the initial leading-edge point of the first light line;

determining a middle leading-edge point of the first light line based on grayscale gradient value on the coordinates of the initial leading-edge point of the first light line and grayscale gradient values of various first edge points;

selecting a second preset number of second edge points in the second light line based on the coordinates of the initial leading-edge point of the second light line;

determining a middle leading-edge point of the second light line based on the grayscale value on the coordinates of the initial leading-edge point of the second light line and the grayscale values of various second edge points; and

determining a target leading-edge point of the projected light line corresponding to the line matching pair, based on the middle leading-edge point of the first light line and the middle leading-edge point of the second light line.

7. The workpiece edge measurement method according to claim 5, wherein the step of determining a target leading-edge point of a projected light line corresponding to the line matching pair, based on a target leading-edge point of the first light line and a target leading-edge point of the second light line, comprises:

calculating an average value of y-coordinate of the middle leading-edge point of the first light line and y-coordinate of the middle leading-edge point of the second light line, so as to obtain average y-coordinate;

determining a point in the first light line whose y-coordinate is the average y-coordinate as the target leading-edge point of the first light line;

determining a point in the second light line whose y-coordinate is the average y-coordinate as the target leading-edge point of the second light line; and

determining the target leading-edge point of the projected light line corresponding to the line matching pair, based on the target leading-edge point of the first light line and the target leading-edge point of the second light line.

8.  A workpiece edge measurement apparatus, **characterized by** comprising:

an acquisition module, configured to acquire a left image and a right image of an edge of a workpiece to be detected that are collected by the binocular camera, wherein the left image and the right image respectively comprise at least one light line projected by the line-structured light emitter;
a determination module, configured to perform line-to-line matching based on at least one light line in the left image and at least one light line in the right image, so as to determine at least one line matching pair, wherein the line matching pair comprises a first light line in the left image and a second light line in the right image, and the first light line and the second light line are derived from the same light line projected by the line-structured light emitter;
the determination module, configured to determine an initial leading-edge point of a first light line, an initial leading-edge point of a second light line, an initial trailing-edge point of the first light line and an initial trailing-edge point of the second light line in each line matching pair, based on coordinate information of respective endpoints of the first light line and coordinate information of respective endpoints of the second light line in each line matching pair;
the determination module, configured to determine a target leading-edge point and a target trailing-edge point of a projected light line corresponding to each line matching pair, based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair; and
the determination module, configured to determine coordinates of the edge of the workpiece to be detected, based on the target leading-edge point and the target trailing-edge point of the projected light line corresponding to each line matching pair.

9.  An electronic device, **characterized by** comprising a processor and a memory, wherein the memory stores a computer program executable by the processor, and the processor, when executing the computer program, implements steps of the workpiece edge measurement method according to any one of claims 1-7.

10. A computer-readable storage medium, **characterized by** storing a computer program thereon, wherein the computer program, when run by a processor, executes steps of the workpiece edge measurement method according to any one of claims 1-7.

FIG. 1

Acquiring a left image and a right image of an edge of the workpiece to be detected that are collected by the binocular camera — S101

Performing line-to-line matching based on at least one light line in the left image and at least one light line in the right image, so as to determine at least one line matching pair — S102

Determining an initial leading-edge point of a first light line, an initial leading-edge point of a second light line, an initial trailing-edge point of the first light line and an initial trailing-edge point of the second light line in each line matching pair based on coordinate information of respective endpoints of the first light line and coordinate information of respective endpoints of the second light line in each line matching pair — S103

Determining a target leading-edge point and a target trailing-edge point of a projected light line corresponding to each line matching pair based on the initial leading-edge point of the first light line, the initial leading-edge point of the second light line, the initial trailing-edge point of the first light line, the initial trailing-edge point of the second light line, grayscale gradient values of various points in the first light line and grayscale gradient values of various points in the second light line in each line matching pair — S104

Determining coordinates of the edge of the workpiece to be detected based on the target leading-edge point and the target trailing-edge point of the projected light line corresponding to each line matching pair — S105

FIG. 2

y — Sheet metal edge

Edge point pair 1

Edge point pair 2

Edge point pair 3

Line-line matching pair 1

Line-line matching pair 2

Line-line matching pair 3

Edge of field-of-view of line light source

Left-camera epipolar image

Right-camera epipolar image

**FIG. 3**

Determining, based on y-coordinates of respective first points in a current light line in the left image, second points in the right image whose y-coordinates are the same as those of the first points — S201

Determining three-dimensional point coordinates corresponding to respective first points based on coordinates of respective first points and coordinates of respective second points — S202

Determining each line matching pair based on the three-dimensional point coordinates corresponding to the respective first points and coordinates of various structured light planes corresponding to the line-structured light emitter — S203

**FIG. 4**

Determining a target leading-edge point of a projected light line corresponding to the line matching pair based on coordinates of the initial leading-edge point of the first light line, grayscale gradient values of various points in the first light line, coordinates of the initial leading-edge point of the second light line and grayscale gradient values of various points in the second light line — S301

Determining a target trailing-edge point of the projected light line corresponding to the line matching pair based on coordinates of the initial trailing-edge point of the first light line, grayscale gradient values of various points in the first light line, coordinates of the initial trailing-edge points of the second light line and grayscale gradient values of various points in the second light line — S302

**FIG. 5**

Selecting a first preset number of first edge points in the first light line based on the coordinates of the initial leading-edge point of the first light line — S401

Determining a middle leading-edge point of the first light line based on grayscale gradient value on the coordinates of the initial leading-edge point of the first light line and grayscale gradient values of various first edge points — S402

Selecting a second preset number of second edge points in the second light line based on the coordinates of the initial leading-edge point of the second light line — S403

Determining a middle leading-edge point of the second light line based on the grayscale gradient value on the coordinates of the initial leading-edge point of the second light line and the grayscale gradient values of various second edge points — S404

Determining a target leading-edge point of the projected light line corresponding to the line matching pair based on the middle leading-edge point of the first light line and the middle leading-edge point of the second light line — S405

**FIG. 6**

Calculating an average value of y-coordinate of the middle leading-edge point of the first light line and y-coordinate of the middle leading-edge point of the second light line, so as to obtain average y-coordinate — S501

Determining a point in the first light line whose y-coordinate is the average y-coordinate as a target leading-edge point of the first light line — S502

Determining a point in the second light line whose y-coordinate is the average y-coordinate as the target leading-edge point of the second light line — S503

Determining a target leading-edge point of the projected light line corresponding to the line matching pair based on the target leading-edge point of the first light line and the target leading-edge point of the second light line — S504

**FIG. 7**

Performing calibration on a line-structured light device — S601

Collecting world coordinates of various mark points on the edge of the workpiece to be detected in advance — S602

Image collection — S603

Extracting device coordinates of various mark points in the images and performing coordinate resolution — S604

Line-to-line matching — S606

Mark point alignment and pose resolution — S605

Edge-point identification and coordinate resolution — S607

Edge-point coordinate transformation — S608

Whether measurement of edge points has been completed — S609 — No

Yes — S6010

Outputting the edge of the workpiece to be detected

**FIG. 8**

Acquisition module — 701

Determination module — 702

**FIG. 9**

**FIG. 10**

## INTERNATIONAL SEARCH REPORT

| International application No. |
|---|
| **PCT/CN2023/127978** |

### A.    CLASSIFICATION OF SUBJECT MATTER

G06T7/13(2017.01)i

According to International Patent Classification (IPC) or to both national classification and IPC

### B.    FIELDS SEARCHED

Minimum documentation searched (classification system followed by classification symbols)

IPC:G06T7

Documentation searched other than minimum documentation to the extent that such documents are included in the fields searched

Electronic data base consulted during the international search (name of data base and, where practicable, search terms used)

CNABS, CNTXT, CNKI, DWPI, USTXT, ENTXT, WOTXT, EPTXT: 双目, 测量, 边缘, 匹配, 光线, 尾部, 起始, 首部, 坐标, 端点, 检测, 图像, binocular, measure, edge, match, light, tail, the end of, header, prelude, coordinate, endpoint, detect, image

### C.    DOCUMENTS CONSIDERED TO BE RELEVANT

| Category* | Citation of document, with indication, where appropriate, of the relevant passages | Relevant to claim No. |
|---|---|---|
| PX | CN 116883445 A (WUHAN ZHONGGUANG AUTOMATION TECHNOLOGY CO., LTD.) 13 October 2023 (2023-10-13) description, paragraphs 4-246 | 1-10 |
| A | CN 102999939 A (WEI YIQUN et al.) 27 March 2013 (2013-03-27) description, paragraphs 17-71 | 1-10 |
| A | CN 116309660 A (CASI VISION TECHNOLOGY (LUOYANG) CO., LTD. et al.) 23 June 2023 (2023-06-23) description, paragraphs 27-135 | 1-10 |
| A | CN 108088386 A (SHENZHEN UNIVERSITY) 29 May 2018 (2018-05-29) entire document | 1-10 |
| A | WO 2023019833 A1 (MECH-MIND ROBOTICS TECHNOLOGIES LTD.) 23 February 2023 (2023-02-23) entire document | 1-10 |

☑ Further documents are listed in the continuation of Box C. ☑ See patent family annex.

| | |
|---|---|
| *    Special categories of cited documents: <br> "A"    document defining the general state of the art which is not considered to be of particular relevance <br> "D"    document cited by the applicant in the international application <br> "E"    earlier application or patent but published on or after the international filing date <br> "L"    document which may throw doubts on priority claim(s) or which is cited to establish the publication date of another citation or other special reason (as specified) <br> "O"    document referring to an oral disclosure, use, exhibition or other means <br> "P"    document published prior to the international filing date but later than the priority date claimed | "T"    later document published after the international filing date or priority date and not in conflict with the application but cited to understand the principle or theory underlying the invention <br> "X"    document of particular relevance; the claimed invention cannot be considered novel or cannot be considered to involve an inventive step when the document is taken alone <br> "Y"    document of particular relevance; the claimed invention cannot be considered to involve an inventive step when the document is combined with one or more other such documents, such combination being obvious to a person skilled in the art <br> "&"    document member of the same patent family |

| Date of the actual completion of the international search | Date of mailing of the international search report |
|---|---|
| **15 April 2024** | **16 April 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**EP 4 607 461 A1**

**INTERNATIONAL SEARCH REPORT**

| International application No. |
| --- |
| **PCT/CN2023/127978** |

**C. DOCUMENTS CONSIDERED TO BE RELEVANT**

| Category* | Citation of document, with indication, where appropriate, of the relevant passages | Relevant to claim No. |
| --- | --- | --- |
| A | 刘家豪 等 (LIU, Jiahao et al.). "基于双目便携式三维扫描技术的小工件测量 (Measurement of Small Workpiece on Portable 3D Scanning Technology Based on Stereo Vision)" 科学技术与工程 (Science Technology and Engineering), Vol. 16, No. 7, 31 March 2016 (2016-03-31), ISSN: 1671-1815, pages 31-41 | 1-10 |

Form PCT/ISA/210 (second sheet) (July 2022)

**INTERNATIONAL SEARCH REPORT**
Information on patent family members

International application No.

**PCT/CN2023/127978**

| Patent document cited in search report | | | Publication date (day/month/year) | Patent family member(s) | | | Publication date (day/month/year) |
|---|---|---|---|---|---|---|---|
| CN | 116883445 | A | 13 October 2023 | None | | | |
| CN | 102999939 | A | 27 March 2013 | WO | 2014044126 | A1 | 27 March 2014 |
| | | | | CN | 102999939 | B | 17 February 2016 |
| CN | 116309660 | A | 23 June 2023 | None | | | |
| CN | 108088386 | A | 29 May 2018 | CN | 108088386 | B | 29 November 2019 |
| WO | 2023019833 | A1 | 23 February 2023 | CN | 113610741 | A | 05 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311008382